(19) Europäisches Patentamt
European Patent Office
Office européen des brevets

(11) **EP 4 607 640 A1**

(12) **EUROPEAN PATENT APPLICATION**
published in accordance with Art. 153(4) EPC

(43) Date of publication:
**27.08.2025 Bulletin 2025/35**

(21) Application number: **23925762.9**

(22) Date of filing: **09.03.2023**

(51) International Patent Classification (IPC):
***H01M 10/0525*** $^{(2010.01)}$

(52) Cooperative Patent Classification (CPC):
**H01M 10/0525; Y02E 60/10**

(86) International application number:
**PCT/CN2023/080395**

(87) International publication number:
**WO 2024/183043 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited**
**Hong Kong (HK)**

(72) Inventors:
• **WANG, Hong**
**Ningde, Fujian 352100 (CN)**

• **LIU, Jiang**
**Ningde, Fujian 352100 (CN)**
• **KANG, Shaohong**
**Ningde, Fujian 352100 (CN)**
• **HUANG, Ying**
**Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **LITHIUM SECONDARY BATTERY AND ELECTRICAL DEVICE**

(57)     The present application provides a lithium secondary battery and an electrical device. The lithium secondary battery comprises a positive electrode sheet and a negative electrode sheet; the lithium content per unit area on a single side surface of the positive electrode sheet is denoted as Wa, and the unit of Wa is $g/m^2$; the lithium content per unit area on a single side surface of the negative electrode sheet is denoted as Wc, and the unit of Wc is $g/m^2$; the reversible capacity per unit area on the surface of the side of the negative electrode sheet facing towards the positive electrode sheet is denoted as Da, and the unit of Da is $mAh/m^2$; the first lithium intercalation capacity per unit area on the surface of the side of the negative electrode sheet facing away from the positive electrode sheet is denoted as Ca, and the unit of Ca is $mAh/m^2$; and the lithium secondary battery meets the following conditions: (aa) and/or (bb), wherein C1 is the theoretical capacity, 3861 mAh/g, of lithium metal.

$$70\% \leq \frac{C1 \times (Wa + Wc)}{Da} \leq 90\% \qquad \text{(aa)}$$

$$63\% \leq \frac{C1 \times (Wa + Wc)}{Ca} \leq 81\% \qquad \text{(bb)}$$

EP 4 607 640 A1

**FIG. 3**

## Description

### TECHNICAL FIELD

The present application relates to the technical field of electrochemical batteries, and specifically relates to a lithium secondary battery and an electrical apparatus.

### BACKGROUND

Lithium secondary batteries have high energy density, high capacity, good cycle stability and rate performance, and have been used in many fields such as the fields of portable electronic devices, electric vehicles, energy storage systems, and aerospace. However, the service lives of the batteries still need to be further prolonged to meet the user demand for battery performance.

Therefore, the current lithium secondary batteries and electrical apparatuses still need to be improved.

### SUMMARY OF THE INVENTION

The inventor finds that after the types of a positive electrode plate, a negative electrode plate, a separator, an electrolyte and the like are fixed, a purpose of optimizing the service life of a lithium secondary battery can be achieved by adjusting design parameters within a proper range.

In view of this, in order to reduce or solve at least one of the above problems to a certain extent, in one aspect, the present application provides a lithium secondary battery. According to the embodiment of the present application, the lithium secondary battery includes a positive electrode plate and a negative electrode plate; the lithium content per unit area on a single surface of the positive electrode plate is denoted as Wa, and the unit of Wa is $g/m^2$; the lithium content per unit area on a single surface of the negative electrode plate is denoted as Wc, and the unit of Wc is $g/m^2$; the reversible capacity per unit area on the surface of the negative electrode plate facing the positive electrode plate is denoted as Da, and the unit of Da is $mAh/m^2$; the first lithiation capacity per unit area on the surface of the negative electrode plate facing away from the positive electrode plate is denoted as Ca, and the unit of Ca is $mAh/m^2$; and the lithium secondary battery meets the following conditions:

$$70\% \leq \frac{C1 \times (Wa + Wc)}{Da} \leq 90\%,$$

and/or,

$$63\% \leq \frac{C1 \times (Wa + Wc)}{Ca} \leq 81\%,$$

wherein C1 is the theoretical capacity, 3,861 mAh/g, of lithium metal. Therefore, when the lithium secondary battery meets the above conditions, the lithium secondary battery will have a relatively long service life, and moreover, the total capacity and the energy density of the lithium secondary battery cannot be remarkably reduced.

According to the embodiment of the present application, the positive electrode plate includes a positive electrode current collector and positive electrode active material layers; the positive electrode active material layers are arranged on two surfaces of the positive electrode current collector; the positive electrode active material layers include positive electrode active materials, and the positive electrode active materials include at least one of lithium iron phosphate, lithium nickel cobalt manganese oxide, lithium nickel cobalt aluminum oxide, lithium cobalt oxide, lithium peroxide, a lithium-rich positive electrode material, lithium manganate, lithium nickelate, lithium vanadate and lithium ferrate. The positive electrode active materials have relatively high capacity and good stability, which facilitates the improvement of the capacity of the lithium secondary battery, as well as the prolonging of the service life of the lithium secondary battery.

According to the embodiment of the present application, based on the total mass of the positive electrode active material layers, the mass content of the positive electrode active materials is greater than or equal to 94%. Therefore, the content of the positive electrode active materials is high, which facilitates the improvement of the capacity and energy density of the lithium secondary battery.

According to the embodiment of the present application, based on the total mass of the positive electrode active material layers, the mass content of the positive electrode active materials is greater than or equal to 96%. Therefore, the capacity and energy density of the lithium secondary battery can be further improved.

According to the embodiment of the present application, each positive electrode active material layer further includes a first conductive agent and a first binder, wherein the first conductive agent includes at least one of carbon nanotubes, carbon black, carbon fibers and graphene; and/or, the first binder includes at least one of polyvinylidene fluoride, polyurethane, styrene butadiene rubber, polyvinyl alcohol, polyacrylate and sodium carboxymethylcellulose. Therefore, the positive electrode active material layers have relatively good conductivity and can be firmly bonded on the surfaces of the positive electrode current collector, the conductivity and the stability of the positive electrode plate can be improved, and then the overall performance of the lithium secondary battery is improved.

According to the embodiment of the present application, the negative electrode plate includes a negative electrode current collector and negative electrode active material layers; the negative electrode active material layers are arranged on two surfaces of the negative electrode current collector; the negative electrode active material layers include negative electrode active materials, and the negative electrode active materials include at least one of graphite, hard carbon, soft carbon, a silicon material, lithium titanate, carbon fibers, mesocarbon microbeads, a silicon-based material and a tin-based material. Therefore, the lithium secondary battery has good overall performance.

According to the embodiment of the present application, the negative electrode active materials include the graphite; and based on the total mass of the negative electrode active materials, the content of the graphite is greater than or equal to 50%. Therefore, the overall stability of the lithium secondary battery is further improved.

According to the embodiment of the present application, the graphite meets at least one of the following conditions: the OI of the graphite is 0.5-7, and optionally, the OI of the graphite is 2-4; the specific surface area of the graphite is $0.8m^2/g$-$1.5m^2/g$; the graphitization degree of the graphite is 70-99%, and optionally, the graphitization degree of the graphite is 75-98%; and the particle size Dv50 of the graphite is 1-20 $\mu$m, and optionally, the particle size Dv50 of the graphite is 4-15 $\mu$m. Therefore, the overall performance of the lithium secondary battery is further improved.

According to the embodiment of the present application, the thickness of the negative electrode plate is 100-300 $\mu$m. Therefore, the negative electrode plate has proper thickness, which facilitates the improvement of the capacity of the lithium secondary battery; and moreover, the negative electrode active material layers do not easily fall off from the surfaces of the negative electrode current collector.

According to the embodiment of the present application, the lithium secondary battery further includes a separator and an electrolyte; the separator is arranged between the positive electrode plate and the negative electrode plate which are adjacent to each other; the conductivity of the electrolyte is 8-20 mS/cm, and optionally, the conductivity of the electrolyte is 9-16 mS/cm; and/or, the viscosity of the electrolyte is 1.5-5 mPa.s, and optionally, the viscosity of the electrolyte is 2-4 mPa.s. Therefore, the electrolyte has high conductivity and/or proper viscosity, which facilitates the improvement of the overall performance of the lithium secondary battery.

In another aspect, the present application provides an electrical apparatus. According to the embodiment of the present application, the electrical apparatus includes the abovementioned lithium secondary battery. Therefore, the electrical apparatus has all the characteristics and advantages of the lithium secondary battery, which will not be listed here.

## BRIEF DESCRIPTION OF THE DRAWINGS

The above and/or additional aspects and advantages of the present application will become apparent and easily understood from the description of the embodiment in conjunction with the accompanying drawings below, in which,

FIG. 1 is a partial structural schematic diagram of a lithium secondary battery according to one embodiment of the present application;
FIG. 2 is a partial structural schematic diagram of a lithium secondary battery according to another embodiment of the present application;
FIG. 3 is a structural schematic diagram of a positive electrode plate according to one embodiment of the present application; and
FIG. 4 is a structural schematic diagram of a negative electrode plate according to one embodiment of the present application

Description of reference numerals

100: positive electrode plate; 200: negative electrode plate; 201: surface of negative electrode plate facing towards positive electrode plate; 202, surface of negative electrode plate facing away from positive electrode plate; 110: positive electrode current collector; 120: positive electrode active material layer; 210: negative electrode current collector; and 220: negative electrode active material layer.

## DETAILED DESCRIPTION

The embodiments of the present application are described in detail below. The embodiments described below are illustrative and are intended only to interpret the present application and should not be construed as a limitation on the present application. If the specific technology or conditions are not indicated in the embodiments, the technology or conditions described in the literature in the art or in accordance with the product specification shall be followed.

In one aspect, the present application provides a lithium secondary battery. According to the embodiment of the present application, the lithium secondary battery can include a positive electrode plate and a negative electrode plate; the lithium content per unit area on a single side surface of the positive electrode plate is denoted as Wa, and the unit of Wa is $g/m^2$; the lithium content per unit area on a single side surface of the negative electrode plate is denoted as Wc, and the unit of Wc is $g/m^2$; the reversible capacity per unit area on the surface of the side of the negative electrode plate facing towards the positive electrode plate is denoted as Da, and the unit of Da is $mAh/m^2$; the first lithiation capacity per unit area on the surface of the side of the negative electrode plate facing away from the positive electrode plate is denoted as Ca, and the unit of Ca is $mAh/m^2$; and the lithium secondary battery meets the following conditions:

$$70\% \leq \frac{C1 \times (Wa + Wc)}{Da} \leq 90\%,$$

and/or,

$$63\% \leq \frac{C1 \times (Wa + Wc)}{Ca} \leq 81\%,$$

wherein C1 is the theoretical capacity, 3,861 mAh/g, of lithium metal. Therefore, when the lithium secondary battery meets the above conditions, the lithium secondary battery will have a relatively long service life, and moreover, obvious adverse influences cannot be caused on the capacity and energy density of the lithium secondary battery. It is to be noted that "the side of the negative electrode plate facing away from the positive electrode plate" refers to the side of the negative electrode plate without being opposite to the positive electrode plate.

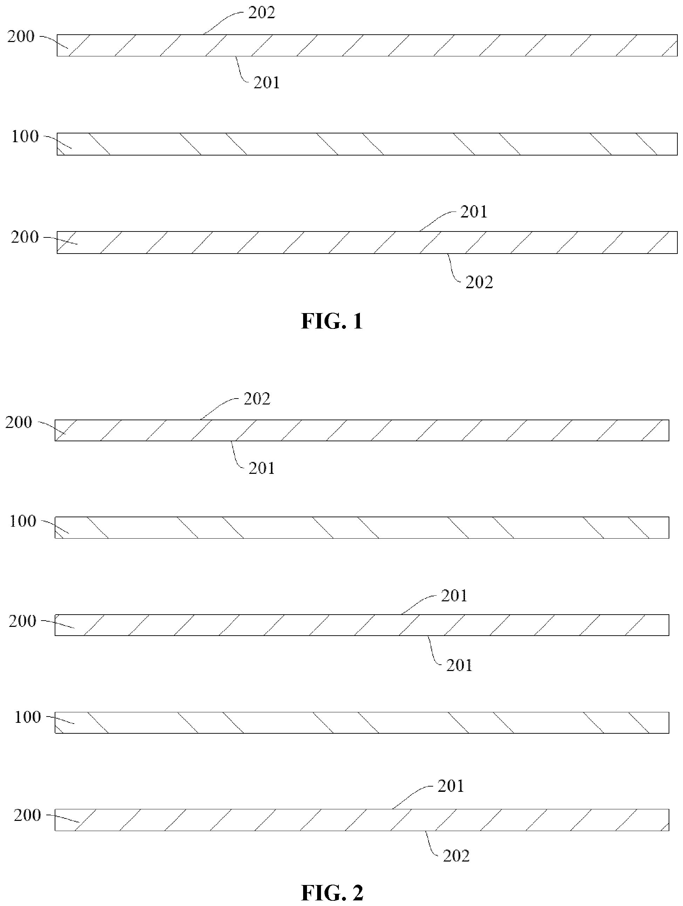

The surface of the negative electrode plate facing towards the positive electrode plate and the surface of the negative electrode plate facing away from the positive electrode plate are described below with reference to the accompanying drawings: with reference to FIG. 1 and FIG. 2, positive electrode plates 100 and negative electrode plates 200 are arranged at intervals, and when one negative electrode plate 200 (the negative electrode plate 200 in the middle position in FIG. 2) is adjacent to two positive electrode plates 100, two surfaces of the negative electrode plate 200 are surfaces 201 of the negative electrode plate facing towards the positive electrode plate; when only one surface of one negative electrode plate 200 (two negative electrode plates in FIG. 1, and negative electrode plates on two side edges in FIG. 2) is adjacent to the corresponding positive electrode plate, the surface of the negative electrode plate adjacent to the corresponding positive electrode plate is a surface 201 of the negative electrode plate facing towards the positive electrode plate, and the surface not adjacent to the corresponding positive electrode plate is a surface 202 of the negative electrode plate facing away from the positive electrode plate. In charging and discharging processes, the surface 202 of the negative electrode plate facing away from the positive electrode plate does not participate in reaction, and the surface 202 of the negative electrode plate facing away from the positive electrode plate is not subjected to lithiation.

According to some embodiments of the present application, in the lithium secondary battery, the quantity of the positive electrode plates 100 can be N, in which, N is a positive integer, for example, N can be 1, 2, 3, 4, 5..., and the quantity of the negative electrode plates 200 can be N+1. Therefore, each surface of the positive electrode plates is provided with the corresponding negative electrode plate to be adjacent to the positive electrode plates (oppositely arranged), which facilitates full utilization of the positive electrode active materials in the positive electrode plates, thereby improving the capacity and energy density of the lithium secondary battery. According to some specific embodiments of the present application, with reference to FIG. 1, in the lithium secondary battery, the quantity of the positive electrode plates 100 is 1, and the quantity of the negative electrode plates 200 is 2. According to some other specific embodiments of the present application, with reference to FIG. 2, the quantity of the positive electrode plates 100 is 2, and the quantity of the negative electrode plates 200 is 3.

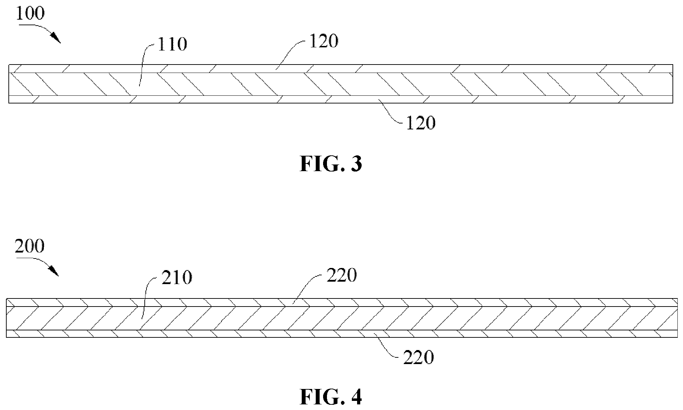

According to some embodiments of the present application, with reference to FIG. 3, each positive electrode plate 100 can include a positive electrode current collector 110 and positive electrode active material layers 120; the positive electrode active material layers 120 are arranged on two surfaces of the positive electrode current collector 110; the positive electrode active material layers 120 include positive electrode active materials, in which, the positive electrode active materials can include at least one of lithium iron phosphate (LFP), lithium nickel cobalt manganese oxide (NCM), lithium nickel cobalt aluminum oxide (NCA), lithium cobalt oxide (LCO), lithium peroxide ($Li_2O_2$), a lithium-rich positive electrode material (such as lithium-rich lithium nickelate), lithium manganate (LMO), lithium nickelate (LNO), lithium vanadate (LVO), lithium ferrate and the like, that is, the positive electrode active materials can include one or more of the above materials. Therefore, the materials have relatively high energy density, and have good stability in the charging and discharging processes, which facilitates the improvement of the energy density of the lithium secondary battery and the prolonging of the service life of the lithium secondary battery.

According to the embodiment of the present application, based on the total mass of the positive electrode active material layers 120, the mass content of the positive electrode active materials is greater than or equal to 94%, for example, the mass content of the positive electrode active materials can be 94%, 95%, and 97%, and thus the content of the positive electrode active materials in the positive electrode active material layers is relatively high, which facilitates the improvement of the capacity and energy density of the lithium secondary battery.

According to some embodiments of the present application, based on the total mass of the positive electrode active material layers 120, the mass content of the positive electrode active materials is greater than or equal to 96%, for example, the mass content of the positive electrode active material can be 96%, 96.5%, and 97.5%, and thus the capacity and energy density of the lithium secondary battery are further improved.

According to some embodiments of the present application, the positive electrode current collector 110 can be an aluminum foil.

According to the embodiment of the present application, the positive electrode active material layers 120 can further include a first conductive agent and a first binder.

According to some embodiments of the present application, the first conductive agent can include at least one of carbon nanotubes, carbon black, carbon fibers and graphene, that is, the first conductive agent can include one or more of the above materials, so that the materials have relatively good conductivity, which facilitates the improvement of the conductivity of the positive electrode plate.

According to the embodiment of the present application, the first binder can include at least one of polyvinylidene fluoride, polyurethane, styrene butadiene rubber, polyvinyl alcohol, polyacrylate and sodium carboxymethylcellulose and the like, that is, the first binder can include one or more of the above materials, and therefore, the positive electrode active material layers can be firmly bonded to the surfaces of the positive electrode current collector by adding the above materials to the positive electrode active material layers, which facilitates the improvement of the stability of the positive electrode plate, and further improvement of the overall performance of the lithium secondary battery.

According to the embodiment of the present application, with reference to FIG. 4, each negative electrode plate 200 can include a negative electrode current collector 210 and negative electrode active material layers 220, in which, the negative electrode active material layers 220 are arranged on two surfaces of the negative electrode current collector 210; the negative electrode active material layers 220 include negative electrode active materials, and the negative electrode active materials can include at least one of graphite, hard carbon, soft carbon, a silicon material, lithium titanate, carbon fibers, mesocarbon microbeads, a silicon-based material, a tin-based material and the like. Therefore, the negative electrode active materials are wide in source and relatively low in price, which facilitates the reduction of the preparation cost of the lithium secondary battery.

According to some embodiments of the present application, the negative electrode active materials include the graphite and can further include at least one of the hard carbon, the soft carbon, the silicon material, the lithium titanate, the carbon fibers, the mesocarbon microbeads, the silicon-based material and the tin-based material. Therefore, the negative electrode active materials can combine the advantages of the graphite and the hard carbon, the soft carbon, the silicon material, the lithium titanate, the carbon fibers, the mesocarbon microbeads, the silicon-based material and the tin-based material, so as to improve the overall performance of the lithium secondary battery.

According to the embodiment of the present application, the negative electrode active materials can include the graphite; based on the total mass of the negative electrode active materials, the content of the graphite is greater than or equal to 50%, for example, the content of the graphite can be 50%, 60%, 70%, 80%, 90%, and 100%, and therefore, the content of the graphite in the negative electrode active materials is relatively high; the graphite structure is relatively stable; and the volume change of the graphite is relatively small in the lithium ion intercalation and deintercalation processes, so that the stability of the negative electrode plate is improved, and then the overall stability of the lithium secondary battery is improved.

There are no special limitation on the content of the hard carbon, the soft carbon, the silicon material, the lithium titanate, the carbon fibers, the mesocarbon microbeads, the silicon-based material, the tin-based material and the like in the negative electrode active materials, and those skilled in the art can add the materials according to actual requirements.

According to some embodiments of the present application, in the negative electrode active materials, the OI (Orientation Index) of the graphite can be 0.5-7, for example, the OI of the graphite can be 0.5, 1, 3, 5, and 7, and thus, if the OI of the graphite is in the above range, the negative electrode active materials can have better infiltration performance in the electrolyte, better electrical conductivity and good stability, which facilitates the improvement of the overall performance of the lithium secondary battery. According to some embodiments of the present application, the OI of the graphite can be 2-4, for example, the OI of the graphite can be 2, 2.5, 3, 3.5, and 4, and thus the overall performance of the lithium secondary battery is further improved. It is to be noted that the OI of the graphite is calculated according to a JIS/K0131-1996 General guide for X-ray diffraction analysis by scanning C004 and C110 peak positions at a low speed and according to a formula OI=I (C004)/I (C110), in which, I (C004) refers to the peak intensity of a C004 peak, and I (C110) refers to the peak intensity of a C110 peak.

According to some embodiments of the present application, in the negative electrode active materials, the specific surface area of the graphite can be $0.8 m^2/g$-$1.5 m^2/g$, for example, the specific surface area of the graphite can be $0.8\ m^2/g$, $1.0\ m^2/g$, $1.2\ m^2/g$, and $1.5\ m^2/g$, so that the specific surface area of the graphite is larger; and the graphite has larger active surface area, which facilitates the improvement of the utilization rate of the graphite, and further improvement of the capacity and rate capability of the lithium secondary battery.

According to some embodiments of the present application, in the negative electrode active materials, the graphitization degree of the graphite can be 70-99%, for example, the graphitization degree of the graphite can be 70%, 74%, 80%, 85%, 90%, 96%, and 99%, so that the graphite has relatively high graphitization degree, which facilitates the improvement of the conductivity of the negative electrode active material, and the diffusion of lithium ions. According to some embodiments of the present application, in the negative electrode active materials, the graphitization degree of the graphite is 75-98%, for example, the graphitization degree of the graphite can be 75%, 78%, 82%, 88%, 95%, and 98%, thus the conductivity of the negative electrode active material is further improved, and then the overall performance of the lithium secondary battery is further improved.

According to some embodiments of the present application, in the negative electrode active materials, the particle size Dv50 of the graphite can be 1-20 $\mu$m, for example, the particle size Dv50 of the graphite can be 1 micron, 5 $\mu$m, 10 $\mu$m, 16 $\mu$m, and 20 $\mu$, and thus the particle size of the graphite is relatively small, which facilitates the improvement of lithium ion intercalation and deintercalation, and further improvement of the charge-discharge performance of the lithium secondary battery under high current density. According to some embodiments of the present application, the particle size Dv50 of the graphite can be 4-15 $\mu$m, for example, the particle size Dv50 of the graphite can be 4 $\mu$m, 8 $\mu$m, 12 $\mu$m, and 15 $\mu$m, and thus the lithium secondary battery has relatively good charge-discharge performance under high current density.

According to some embodiments of the present application, each negative electrode active material layer can further include a second conductive agent and a second binder. According to some embodiments of the present application, the second conductive agent can include at least one of carbon nanotubes, carbon black, carbon fibers and graphene, so the second conductive agent have relatively good conductivity, which facilitates the improvement of the conductivity of the negative electrode plate. According to some embodiments of the present application, the second binder can include at least one of polyvinylidene fluoride, polyurethane, styrene butadiene rubber, polyvinyl alcohol, polyacrylate and sodium carboxymethylcellulose and the like, so the positive electrode active material layers can be firmly bonded to the surfaces of the negative electrode current collector, then the stability of the negative electrode plate can be improved, and the overall performance of the lithium secondary battery is improved.

According to some embodiments of the present application, the thickness of the negative electrode plates 200 can be 100-300 $\mu$m, for example, the thickness of the negative electrode plates 200 can be 100 $\mu$m, 150 $\mu$m, 200 $\mu$m, 250 $\mu$m, and 300 $\mu$m, and therefore, the negative electrode plate has a suitable thickness and the negative electrode active material layers on the negative electrode current collector also have suitable thickness, which facilitates the improvement of the capacity and energy density of the lithium secondary battery.

According to some embodiments of the present application, the lithium secondary battery can further include a separator and an electrolyte, in which, the separator is arranged between the positive electrode plate and the negative electrode plate which are adjacent to each other.

According to the embodiment of the present application, the material of the separator may include polyethylene. According to some embodiments of the present application, the separator can be a polyethylene porous membrane, and thus the separator can prevent the positive electrode plate and the negative electrode plate from being in direct contact and can also provide a channel for ion migration.

According to the embodiment of the present application, the electrolyte can be a solution of $LiPF_6$ (lithium hexafluorophosphate), and a solvent of the electrolyte can include at least one of EC (ethylene carbonate), PC (propylene carbonate), DMC (dimethyl carbonate) and the like.

According to the embodiment of the present application, the conductivity of the electrolyte can be 8-20mS/cm, for example, the conductivity of the electrolyte can be 8 mS/cm, 10 mS/cm, 13 mS/cm, 18 mS/cm, and 20 mS/cm, thus the electrolyte has relatively good conductivity, which facilitates the improvement of the overall performance of the lithium secondary battery. Preferably, the conductivity of the electrolyte can be 9-16mS/cm, for example, the conductivity of the electrolyte can be 9 mS/cm, 11 mS/cm, 12 mS/cm, 14 mS/cm, and 16 mS/cm.

According to the embodiment of the present application, the viscosity of the electrolyte can be 1.5-5 mPa.s, for example, the viscosity of the electrolyte can be 1.5 mPa.s, 2 mPa.s, 2.5 mPa.s, 3 mPa.s, 3.5 mPa.s, 4 mPa.s, 4.5 mPa.s, and 5 mPa.s, and if the viscosity of the electrolyte is set in the range, the lithium ions will have relatively high migration rate;

and moreover, the positive electrode plate and the negative electrode plate can be infiltrated in the electrolyte within relatively short time, which facilitates the improvement of the overall performance of the lithium secondary battery. Preferably, the viscosity of the electrolyte is 2-4 mPa.s, for example, the viscosity of the electrolyte can be 2 mPa•s, 2.3 mPa•s, 2.8 mPa•s, 3.2 mPa•s, 3.7 mPa•s, and 4 mPa•s.

In another aspect, the present application provides an electrical apparatus. According to the embodiments of the present application, the electrical apparatus includes the abovementioned lithium secondary battery. Therefore, the electrical apparatus has all characteristics and advantages of the lithium secondary battery, which are not described again. In general, the electrical apparatus is long in endurance time.

According to some embodiments of the present application, the electrical apparatus can include a vehicle. According to some other embodiments of the present application, the vehicle further includes a vehicle body chassis and a vehicle body arranged at the upper part of the vehicle body chassis; and the electrical apparatus meets at least one of the following conditions: the electrical apparatus is located on the side of the vehicle body chassis close to the vehicle body; the electrical apparatus is located on the side of the vehicle body chassis far away from the vehicle body; and the electrical apparatus is arranged in the vehicle body chassis.

The solution of the present application is described below through specific embodiments, and it is to be noted that the following embodiments are only used for illustrating the present application and should not be regarded as limiting the scope of the present application. If the specific technology or conditions are not indicated in the embodiments, the technology or conditions described in the literature in the art or in accordance with the product specification shall be followed. Where manufacturers are not specified, the reagents or instruments used are conventional products and are commercially available.

**Example 1**

*(1) Preparation of positive electrode plate*

A positive electrode active material, namely, lithium iron phosphate, a conductive agent, namely, acetylene black, and a binder PVDF (polyvinylidene fluoride) were mixed according to a weight ratio of 94:4:2; a solvent, namely, N-methyl pyrrolidone was added to the mixture, and fully stirred and uniformly mixed to obtain positive electrode slurry; then the positive electrode slurry was coated on two surfaces of a positive current collector, namely, aluminum foil, in which, the coating weight of the positive electrode slurry was 168.96 $g/m^2$ (by weight without the solvent); and then drying and cold-pressing were carried out to obtain the positive electrode plate.

*(2) Preparation of negative electrode plate*

A negative electrode active material, namely, artificial graphite, the conductive agent, namely, acetylene black, a binder SBR (styrene butadiene rubber), and a binder CMC (sodium carboxymethylcellulose) were mixed according to a weight ratio of 95:1.5:3.1:0.4; a solvent, namely, deionized water was added to the mixture, and fully stirred and uniformly mixed to obtain negative electrode slurry; then the negative electrode slurry was coated on two surfaces of a negative electrode current collector, namely, copper foil, in which, the coating weight of the negative electrode slurry was 100g/1540.25$mm^2$ (by weight without the solvent); and then drying and cold-pressing were carried out to obtain the negative electrode plate.

*(3) Preparation of electrolyte*

In an argon atmosphere glove box with water content of less than 10 ppm (ppm refers to one part per million), EC (ethylene carbonate), PC (propylene carbonate), and DMC (dimethyl carbonate) were mixed according to a volume ratio of 1:1:1, and then fully dried lithium salt $LiPF_6$ was dissolved in the mixed organic solvent, and uniformly stirred to obtain the electrolyte, in which, the concentration of $LiPF_6$ was 1 mol/L.

*(4) separator*

The separator was a polyethylene porous membrane.

*(5) Preparation of lithium secondary battery*

The positive electrode plate, the separator and the negative electrode plate were sequentially stacked, the separator was positioned between the positive electrode plate and the negative electrode plate to achieve an isolation effect, and wound to obtain a bare cell. The bare cell was placed into an outer package, the electrolyte prepared in step (3) was injected, and then packaging was performed to obtain the lithium secondary battery.

In the Example 1, the lithium content Wa per unit area on a single side surface of the positive electrode plate was 6.9930 g/m$^2$; the lithium content Wc per unit area on a single side surface of the negative electrode plate was 0 g; the reversible capacity Da per unit area on the surface of the side of the negative electrode plate facing towards the positive electrode plate was 3,2138 mAh/m$^2$; and the first lithiation capacity Ca per unit area on the surface of the side of the negative electrode plate facing away from the positive electrode plate was 3,5150 mAh/m$^2$.

## Example 2

The preparation process of the lithium secondary battery in the Example 2 was the same as that in the Example 1, and the difference was that in the Example 2, the coating weight of the positive electrode slurry was 150.19 g/m$^2$, and the lithium content Wa per unit area on the single side surface of the positive electrode plate was 6.2160 g/m$^2$.

## Example 3

The preparation process of the lithium secondary battery in the Example 2 was the same as that in the Example 1, and the difference was that in the Example 3, the coating weight of the positive electrode slurry was 138.58 g/m$^2$, and the lithium content Wa per unit area on the single side surface of the positive electrode plate was 5.7354 g/m$^2$.

## Example 4

The preparation process of the lithium secondary battery in the Example 4 was the same as that in the Example 1, and the difference was that in the Example 4, the coating weight of the positive electrode slurry was 140.78 g/m$^2$, and the lithium content Wa per unit area on the single side surface of the positive electrode plate was 5.8266 g/m$^2$.

## Example 5

The preparation process of the lithium secondary battery in the Example 5 was the same as that in the Example 1, and the difference was that in the Example 5, the coating weight of the positive electrode slurry was 178.17 g/m$^2$, and the lithium content Wa per unit area on the single side surface of the positive electrode plate was 7.3741 g/m$^2$.

## Example 6

The preparation process of the lithium secondary battery in the Example 6 was the same as that in the Example 1, and the difference was that in the Example 6, the coating weight of the positive electrode slurry was 181 g/m$^2$, and the lithium content Wa per unit area on the single side surface of the positive electrode plate was 7.4913 g/m$^2$.

## Example 7

In the Example 7, when preparing the negative electrode plate, a certain amount of lithium powder was added to the negative electrode active materials, the coating weight of the positive electrode slurry was 120.81 g/m$^2$, the lithium content Wa per unit area on the single side surface of the positive electrode plate was 5.0000 g/m$^2$, the lithium content Wc per unit area on the single side surface of the negative electrode plate was 1.9930 g/m$^2$, and other steps were the same as those in the Example 1.

## Example 8

In the Example 8, when preparing the negative electrode plate, a certain amount of lithium powder was added to the negative electrode active materials, the coating weight of the positive electrode slurry was 128.06 g/m$^2$, the lithium content Wa per unit area on the single side surface of the positive electrode plate was 5.3000 g/m$^2$, the lithium content Wc per unit area on the single side surface of the negative electrode plate was 1.6930 g/m$^2$, and other steps were the same as those in the Example 1.

## Contrast Example 1

The preparation process of the lithium secondary battery in the Contrast Example 1 was the same as that in the Example 1, and the difference was that in the Contrast Example 1, the coating weight of the positive electrode slurry was 187.73 g/m$^2$, and the lithium content Wa per unit area on the single side surface of the positive electrode plate was 7.7700

$g/m^2$.

## Contrast Example 2

The preparation process of the lithium secondary battery in the Contrast Example 2 was the same as that in the Example 1, and the difference was that in the Contrast Example 2, the coating weight of the positive electrode slurry was 131.41 $g/m^2$, and the lithium content Wa per unit area on the single side surface of the positive electrode plate was 5.4390 $g/m^2$.

Performance test was carried out on the lithium secondary batteries and materials in the Examples 1-8 and the Contrast Examples 1-2 by the following test method:

(1) Cycle performance test

At temperature of 25°C, the lithium secondary battery was charged with 1C (current value of a theoretical capacity was completely discharged within 1 h) constant current until the voltage was 3.65 V, then charged with 3.65V constant voltage until the current was 0.05C, stood for 5 min, and then discharged with 1C constant current until the voltage was 2.5V, which formed a charge-discharge cycle process, and the discharge capacity in this cycle was the discharge capacity of the first cycle. Multiple cycle charge-discharge tests were carried out on the lithium secondary battery according to the above method until the discharge capacity of the lithium secondary battery was attenuated to 80% of the discharge capacity of the first cycle, and the cycle times of the lithium secondary battery was recorded as 80% SOH life.

(2) After the lithium secondary battery was completely discharged within a used voltage range at nominal multiplying power, the lithium secondary battery was disassembled in a glove box filled with nitrogen, and then the element contents, weights and capacities of the positive electrode plate and the negative electrode plate were tested. It is to be noted that the nominal multiplying power and the used voltage range were confirmed according to a nameplate of the lithium secondary battery.

Element content test: in the glove box filled with nitrogen, the elements and element contents in the positive electrode plate and the negative electrode plate were analyzed by an ICP (inductively coupled plasma emission spectrometer).

The weight measurement was performed on the positive electrode plate and the negative electrode plate in the glove box filled with nitrogen, and the weight was measured by an electronic balance with precision of 0.0001 g.

Test of lithium content Wa per unit area on a single side surface of the positive electrode plate: the pretreatment referred to a standard Microwave Acid Digestion of Silicate EPA-3052-1996; when the positive electrode active materials were lithium cobalt oxide, ternary material and lithium manganate material, a heating plate or microwave was adopted for digestion, and aqua regia was adopted for digestion; when the positive electrode active materials were lithium iron phosphate, microwave was adopted for digestion, and reverse aqua regia was adopted for digestion; and the test method referred to Inductively Coupled Plasma Atomic Emission Spectrometry EPA 6010D-2018.

Test of lithium content Wc per unit area on a single side surface of the negative electrode plate: the pretreatment referred to the standard Microwave Acid Digestion of Silicate EPA-3052-1996; when the negative electrode active materials were graphite, nitric acid was adopted for microwave digestion; and the test method referred to the Inductively Coupled Plasma Atomic Emission Spectrometry EPA 6010D-2018.

Test method for capacity of negative electrode plate: the disassembled negative electrode plate was washed three times with DMC (dimethyl carbonate) to obtain the negative electrode plate (including a surface of the negative electrode plate facing towards the positive electrode plate, and a surface of the negative electrode plate facing away from the positive electrode plate); a button half cell was formed by the negative electrode plate and a lithium metal sheet respectively, and the half cell was charged with 0.1C current and voltage interval of 0.005V-2.0V, so as to test the reversible capacity of the negative electrode plate and the first lithiation capacity of the negative electrode plate without lithiation; and then the corresponding reversible capacity (the reversible capacity Da per unit area on the surface of the side of the negative electrode plate facing towards the positive electrode plate) and first lithiation capacity (the first lithiation capacity Ca per unit area on the surface of the side of the negative electrode plate facing away from the positive electrode plate) of the negative electrode plate were converted in an area equal proportion. When testing the reversible capacity of the negative electrode plate, the surface of the negative electrode plate facing towards the positive electrode plate was in contact with the separator; and when testing the first lithiation capacity of the negative electrode plate without lithiation, the middle position of the negative electrode plate was taken (because lithiation possibly occurred on the edge of the side of the negative electrode plate facing away from the positive electrode plate, but the probability was very low, and the edge area was avoided during sampling), and the surface of the negative electrode plate facing away from the positive electrode plate was in contact with the separator. It is to be noted that the battery was assembled in the glove box filled with nitrogen.

(3) Specific surface area test

The specific surface area of the graphite was measured by GB/T19587-2017 Gas adsorption BET method. The adsorption quantity of gas on a surface of a solid (a test sample) under different relative pressures was measured at a constant low temperature, and the adsorption quantity of a monomolecular layer of the sample was obtained based on a BET multilayer adsorption theory and an equation thereof, and then the specific surface area of the solid was calculated.

(4) Graphitization degree

The graphitization degree of the graphite was tested according to the JIS/K0131-1996 General guide for X-ray diffraction analysis. Crystal cell parameters were calculated by X-ray polycrystalline diffraction, peak searching was carried out by a gravity center method to obtain C004 and Si311 peak positions of two parallel samples, the C004 and Si311 peak positions were substituted into an interplanar spacing equation to calculate the value of a space d002 between graphitic layers; and the obtained d002 was substituted into a Mering-Maire equation (also called as a Franklin equation): $g=[(3.440-d002)/(3.440-3.354)]\times100\%$, thus obtaining the value of the graphitization degree g.

(5) Particle size Dv50

The particle size Dv50 of the graphite was tested by a GB/T19077.1-2009 particle size distribution laser diffraction method. The angle of scattered light of particles was in an inverse relationship with the diameter of the particles under the irradiation of a laser beam, the intensity of the scattered light was attenuated in logarithmic rules along with the increase of the angle, and the energy distribution of the scattered light was directly related to the distribution of the diameter of the particles; and the particle size distribution characteristics of the particles could be obtained by receiving and measuring the energy distribution of the scattered light.

(6) Electrolyte viscosity test

The electrolyte viscosity was tested by a rotation method in standard GB/T10247-2008 Methods of Viscosity Measurement, and the viscosity testing condition was 25°C.

(7) Electrolyte conductivity test

The electrolyte conductivity was tested according to 5.8 Conductivity Determination in HG/T4067-2015 Cell Liquor of Lithium Hexafluoroposphate, and the conductivity test was carried out under a constant temperature condition of 25°C.

Related parameters and test results in each embodiment and contrast sample are recorded in a Table 1.

Table 1 Test result of related performances of lithium secondary battery in each embodiment and contrast sample

| Sample | Wa g/m² | We g/m² | Ca mAh/m² | Da mAh/m² | C1×(Wa+Wc)/Ca | C1×(Wa+Wc)/Da | 80%SOH life |
|---|---|---|---|---|---|---|---|
| Example 1 | 6.9930 | 0 | 35150 | 32138 | 76.8% | 84.0% | 7000 |
| Example 2 | 6.2160 | 0 | 35150 | 32138 | 68.3% | 74.7% | 7850 |
| Example 3 | 5.7354 | 0 | 35150 | 32138 | 63% | 68.9% | 7900 |
| Example 4 | 5.8266 | 0 | 35150 | 32138 | 64.0% | 70% | 7850 |
| Example 5 | 7.3741 | 0 | 35150 | 32138 | 81% | 88.6% | 6050 |
| Example 6 | 7.4913 | 0 | 35150 | 32138 | 82.3% | 90% | 6000 |
| Example 7 | 5.0000 | 1.9930 | 35150 | 32138 | 76.8% | 84.0% | 7000 |
| Example 8 | 5.3000 | 1.6930 | 35150 | 32138 | 76.8% | 84.0% | 7000 |
| Contrast Example 1 | 7.7700 | 0 | 35150 | 32138 | 85.3% | 93.3% | 4800 |
| Contrast Example 2 | 5.4390 | 0 | 35150 | 32138 | 59.7% | 65.3% | 7800 |

The test results show that in the Examples 1-8, the lithium secondary batteries meet that the value of C1×(Wa+Wc)/Ca is in the range of 63-81% and/or the value of C1×(Wa+Wc)/Da is in the range of 70-90%; in the Examples 1-8, the lithium secondary batteries have good cycle performance, the cycle times for the battery discharge capacity to be attenuated to 80% of the discharge capacity of the first cycle are all larger than 6000 times, so the lithium secondary battery has long service life; moreover, in the Examples 1-8, the capacity and energy density of the lithium secondary batteries are relatively high (specific data are not listed in the Table 1); it can be seen in the Table 1 that the cycle performance of the lithium secondary battery in the Example 1 is relatively poor; in addition, the value of $C1 \times (Wa+Wc)/Ca$ and the value of $C1 \times (Wa+Wc)/Da$ in the Example 2 are both small, although it is cycled 7800 times to attenuate the discharge capacity of the lithium secondary battery in the Example 2 to be 80% of the discharge capacity of first cycle, the capacity and energy density of the lithium secondary battery in the Contrast Example 2 are low (specific data are not listed in the Table 1), that is, in the Contrast Example 2, although the cycle stability of the battery is good, it is ensured that the capacity and energy density of the battery are remarkably reduced. In addition, when the value of $C1 \times (Wa+Wc)/Ca$ is smaller than 63%, and/or, the value of $C1 \times (Wa+Wc)/Da$ is smaller than 70%, the cost of the lithium secondary battery will be remarkably increased along with further reduction of the value of $C1 \times (Wa+Wc)/Ca$ and the value of $C1 \times (Wa+Wc)/Da$, and the prolonging degree of the service life of the lithium secondary battery is reduced, which is not in direct proportion to the cost.

In general, when the lithium secondary battery meets the following conditions,

$$70\% \leq \frac{C1 \times (Wa + Wc)}{Da} \leq 90\%$$

and/or, if

$$63\% \leq \frac{C1 \times (Wa + Wc)}{Ca} \leq 81\%,$$

the lithium secondary battery has a longer service life, and moreover, the lithium secondary battery can also keep relatively high capacity and energy density.

In the description of the present application, "A and/or B" may include any one of the cases that only A exists, only B exists, both A and B exist, in which, A and B are used only as examples and may be any technical feature of the connection of "and/or" in the present application.

Unless otherwise indicated, all scientific and technical terms used in the present application have the same meanings as those ordinarily understood by those skilled in the art. All patents and public publications involved in the present application are incorporated into the present application as a whole by citation. The terms "contains" or "includes" are open-ended, i.e., they include what is indicated in the present application, but do not exclude other aspects.

In the description of this specification, the reference terms "one embodiment", "another embodiment", etc., are intended to be included in at least one embodiment of the present application in conjunction with the specific features, structures, materials or features described in the embodiment. In this specification, the schematic description of the above terms does not have to be for the same embodiments or examples. Furthermore, the specific features, structures, materials, or features described may be combined in an appropriate manner in any one or more embodiments or examples. In addition, without contradicting each other, those skilled in the art may combine and combine the different embodiments or examples described in this specification and the features of the different embodiments or examples. In addition, it is to be noted that the terms "first" and "second" in this specification are used for descriptive purposes only and should not be construed as indicating or implying relative importance or implying the number of technical features indicated.

Although the embodiments of the present application has been shown and described above, it is to be understood that the embodiments are exemplary and cannot be construed as limiting the present application, and those skilled in the art may change, modify, replace and vary the embodiments within the scope of the present application.

**Claims**

1. A lithium secondary battery, comprising a positive electrode plate and a negative electrode plate, wherein the lithium content per unit area on a single surface of the positive electrode plate is denoted as Wa, and the unit of Wa is $g/m^2$; the lithium content per unit area on a single surface of the negative electrode plate is denoted as Wc, and the unit of Wc is $g/m^2$; the reversible capacity per unit area on the surface of the negative electrode plate facing the positive electrode plate is denoted as Da, and the unit of Da is $mAh/m^2$; the first lithiation capacity per unit area on the surface of the negative electrode plate facing away from the positive electrode plate is denoted as Ca, and the unit of Ca is mAh/m$^2$; and the lithium secondary battery meets the following conditions:

$$70\% \leq \frac{C1 \times (Wa + Wc)}{Da} \leq 90\%$$

and/or,

$$63\% \leq \frac{C1 \times (Wa + Wc)}{Ca} \leq 81\%$$

wherein C1 is the theoretical capacity, 3,861 mAh/g, of lithium metal.

2. The lithium secondary battery according to claim 1, wherein the positive electrode plate comprises a positive electrode current collector and positive electrode active material layers; the positive electrode active material layers are arranged on two surfaces of the positive electrode current collector; and the positive electrode active material layers comprise positive electrode active materials, and the positive electrode active materials comprise at least one of lithium iron phosphate, lithium nickel cobalt manganese oxide, lithium nickel cobalt aluminum oxide, lithium cobalt oxide, lithium peroxide, a lithium-rich positive electrode material, lithium manganate, lithium nickelate, lithium vanadate and lithium ferrate.

3. The lithium secondary battery according to claim 2, wherein based on the total mass of the positive electrode active material layers, the mass content of the positive electrode active materials is greater than or equal to 94%, and optionally, the mass content of the positive electrode active materials is greater than or equal to 96%.

4. The lithium secondary battery according to claim 2 or 3, wherein the positive electrode active material layers further comprise a first conductive agent and a first binder, wherein

   the first conductive agent comprises at least one of carbon nanotubes, carbon black, carbon fibers and graphene; and/or, the first binder comprises at least one of polyvinylidene fluoride, polyurethane, styrene butadiene rubber, polyvinyl alcohol, polyacrylate and sodium carboxymethylcellulose.

5. The lithium secondary battery according to any one of claims 1 to 4, wherein the negative electrode plate comprises a negative electrode current collector and negative electrode active material layers; the negative electrode active material layers are arranged on two surfaces of the negative electrode current collector; the negative electrode active material layers comprise negative electrode active materials, and the negative electrode active materials comprise at least one of graphite, hard carbon, soft carbon, a silicon material, lithium titanate, carbon fibers, mesocarbon microbeads, a silicon-based material and a tin-based material.

6. The lithium secondary battery according to claim 5, wherein the negative electrode active materials comprise graphite; and based on the total mass of the negative electrode active materials, the content of the graphite is greater than or equal to 50%.

7. The lithium secondary battery according to claim 5 or 6, wherein the graphite meets at least one of the following conditions:

   the OI of the graphite is 0.5-7, and optionally, the OI of the graphite is 2-4;
   the specific surface area of the graphite is 0.8m$^2$/g-1.5m$^2$/g;
   the graphitization degree of the graphite is 70-99%, and optionally, the graphitization degree of the graphite is 75-98%; and
   the particle size Dv50 of the graphite is 1-20 $\mu$m, and optionally, the particle size Dv50 of the graphite is 4-15 $\mu$m.

8. The lithium secondary battery according to any one of claims 1 to 7, wherein the thickness of the negative electrode plate is 100-300 $\mu$m.

9. The lithium secondary battery according to any one of claims 1 to 8, further comprising a separator and an electrolyte, wherein the separator is arranged between the positive electrode plate and the negative electrode plate which are adjacent to each other; the conductivity of the electrolyte is 8-20 mS/cm, and optionally, the conductivity of the electrolyte is 9-16 mS/cm; and/or, the viscosity of the electrolyte is 1.5-5 mPa.s, and optionally, the viscosity of the electrolyte is 2-4 mPa.s.

10. An electrical apparatus, comprising the lithium secondary battery according to any one of claims 1 to 9.

**FIG. 1**

**FIG. 2**

**FIG. 3**

**FIG. 4**

## INTERNATIONAL SEARCH REPORT

| | International application No. |
|---|---|
| | **PCT/CN2023/080395** |

| A. | CLASSIFICATION OF SUBJECT MATTER |
|---|---|

H01M10/0525(2010.01)i

According to International Patent Classification (IPC) or to both national classification and IPC

| B. | FIELDS SEARCHED |
|---|---|

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, CNKI: 电池, 锂, 正极, 负极, 阳极, 阴极, 面积, 含量, g, 克, m2, 平方米, 容量, battery, cell, lithium, li, positive, negative, cathode, anode, area, content, capacity

| C. | DOCUMENTS CONSIDERED TO BE RELEVANT | |
|---|---|---|
| Category* | Citation of document, with indication, where appropriate, of the relevant passages | Relevant to claim No. |
| A | CN 111384405 A (NINGDE CONTEMPORARY AMPEREX TECHNOLOGY CO., LTD.) 07 July 2020 (2020-07-07) description, paragraph 6 | 1-10 |
| A | CN 102487151 A (BYD CO., LTD.) 06 June 2012 (2012-06-06) entire document | 1-10 |
| A | CN 105047986 A (GUANGDONG ZHUGUANG NEW ENERGY TECHNOLOGY CO., LTD.) 11 November 2015 (2015-11-11) entire document | 1-10 |
| A | CN 110854361 A (SAMSUNG SDI CO., LTD.) 28 February 2020 (2020-02-28) entire document | 1-10 |
| A | CN 111164819 A (TOSHIBA CORP.) 15 May 2020 (2020-05-15) entire document | 1-10 |
| A | CN 114730855 A (NINGDE AMPEREX TECHNOLOGY LTD.) 08 July 2022 (2022-07-08) entire document | 1-10 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2023** | **15 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| :--- |
| **PCT/CN2023/080395** |

### C. DOCUMENTS CONSIDERED TO BE RELEVANT

| Category* | Citation of document, with indication, where appropriate, of the relevant passages | Relevant to claim No. |
| :---: | :--- | :---: |
| A | WO 2023013617 A1 (MAXELL, LTD.) 09 February 2023 (2023-02-09) entire document | 1-10 |

Form PCT/ISA/210 (second sheet) (July 2022)

**EP 4 607 640 A1**

### INTERNATIONAL SEARCH REPORT
**Information on patent family members**

International application No.

**PCT/CN2023/080395**

| Patent document cited in search report | | | Publication date (day/month/year) | Patent family member(s) | | | Publication date (day/month/year) |
|---|---|---|---|---|---|---|---|
| CN | 111384405 | A | 07 July 2020 | WO | 2020133671 | A1 | 02 July 2020 |
| | | | | US | 2022069284 | A1 | 03 March 2022 |
| | | | | EP | 3905396 | A1 | 03 November 2021 |
| | | | | EP | 3905396 | A4 | 27 April 2022 |
| | | | | EP | 3905396 | B1 | 15 March 2023 |
| CN | 102487151 | A | 06 June 2012 | None | | | |
| CN | 105047986 | A | 11 November 2015 | None | | | |
| CN | 110854361 | A | 28 February 2020 | KR | 20200021787 | A | 02 March 2020 |
| | | | | KR | 102287331 | B1 | 06 August 2021 |
| | | | | US | 2020067078 | A1 | 27 February 2020 |
| | | | | US | 10978697 | B2 | 13 April 2021 |
| CN | 111164819 | A | 15 May 2020 | US | 2020212441 | A1 | 02 July 2020 |
| | | | | US | 11527751 | B2 | 13 December 2022 |
| | | | | WO | 2019082338 | A1 | 02 May 2019 |
| | | | | JPWO | 2019082338 | A1 | 01 October 2020 |
| | | | | JP | 6871405 | B2 | 12 May 2021 |
| | | | | EP | 3703175 | A1 | 02 September 2020 |
| | | | | EP | 3703175 | A4 | 23 June 2021 |
| CN | 114730855 | A | 08 July 2022 | None | | | |
| WO | 2023013617 | A1 | 09 February 2023 | None | | | |

Form PCT/ISA/210 (patent family annex) (July 2022)